# EUROPEAN PATENT APPLICATION

(11) **EP 4 155 508 A1**
(43) Date of publication of application: **29.03.2023**
(21) Application number: 21382872.6
(22) Date of filing: 28.09.2021
(51) Int. Cl.: F01K 3/12

(54) **ENERGY STORAGE PLANT AND OPERATING METHOD**

(71) Applicant: Siemens Gamesa Renewable Energy GmbH & Co. KG, 20097 Hamburg (DE)
(72) Inventor: The designation of the inventor has not yet been filed
(74) Representative: SGRE-Association

(57) **Abstract**

An energy storage plant for storing energy is provided, which comprises two or more plant modules (10, 20). Each plant module (10, 20) comprises at least a heat source (11, 21) configured to provide heat to a heat transfer fluid; a thermal storage device (12, 22) configured to store thermal energy; a heat exchanger (13, 23) configured to receive heat via the heat transfer fluid and to provide heat to a working fluid of a heat consuming system (180); a charging flow path configured to transfer heat from the heat source (11, 21) to the thermal storage device (12, 22) via the heat transfer fluid; and a discharging flow path configured to transfer heat from the thermal storage device (12, 22) to the heat exchanger (13, 23) via the heat transfer fluid. The thermal storage device (12, 22), the charging flow path and the discharging flow path of each plant module (10, 20) are separate from the thermal storage device, the charging flow path and the discharging flow path of each of the other of said two or more plant modules (10, 20).

## Description

### FIELD OF THE INVENTION

The present invention relates to an energy storage plant for storing energy, such as electrical energy or thermal energy, which is stored in the form of thermal energy. It further relates to a method of operating such energy storage plant.

### BACKGROUND

Electric-thermal energy storage (ETES) systems provide a flexible energy storage. Such system can have a storage capacity of the GWh scale and can for example be used to store electrical energy in the form of thermal energy, which can later be converted back to electrical energy as required. Such ETES system can for example be used to secure a stable energy supply in volatile weather conditions. A respective energy storage system may include a heater, a blower, a storage device and a heat consumer, such as a heat recovery steam generator (HRSG). A suitable energy storage device for storing thermal energy is for example described in the document EP 3 102 796 B1.

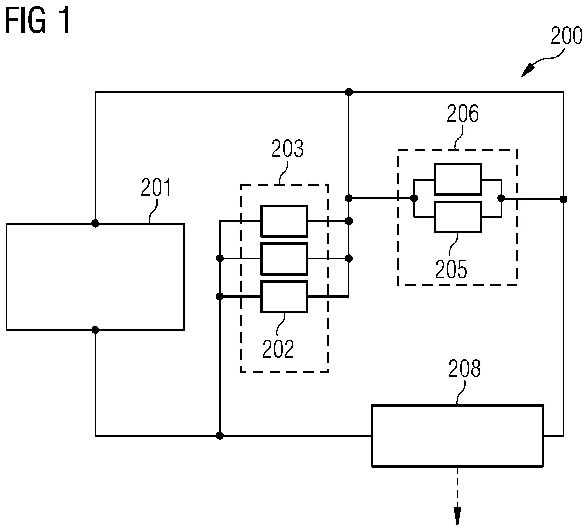

Fig. 1 schematically illustrates an exemplary configuration of a respective energy storage system 200. A heater 202 may receive electrical energy that is to be stored, which is converted to heat and conveyed via a fluid by means of a blower 205 along a predetermined charging flow path to a storage device 201. When energy is to be discharged from the energy storage system 200, the blower 205 may convey the heat transfer fluid along a predetermined discharging flow path through the storage device 201 and the heat recovery steam generator 208, which can generate steam that is converted to electricity by means of a steam turbine. Certain components of the energy storage system 200 may have a limited power rating. To increase the capacity of the system, plural heaters 202 may for example be connected in parallel and thereby form a heater island 203. Likewise, if the capability of the blower to convey the heat transfer fluid in the flow paths needs to be increased, several blowers 205 can be connected in parallel, thus forming a blower island 206. The HRSG 208 is a single device that provides the steam to drive the steam turbine, or the steam may directly be used by a respective heat consumer. Manifolds are installed upstream and downstream of the component islands 203, 206 to connect the components within one island.

To provide scaling of such system is relatively difficult. Furthermore, the system 200 suffers from an increased complexity. Also, controlling the different components of the system 200 to provide proper operation is difficult and relatively complex, since the different components have to be coordinated and synchronized.

### SUMMARY

Accordingly, there is a need to mitigate at least some of the drawbacks mentioned above and to provide an improved energy storage system, in particular to reduce complexity and/or to facilitate the scaling of such system.

This need is met by the features of the independent claims. The dependent claims describe embodiments of the invention.

According to an embodiment, an energy storage plant for storing energy is provided. The plant comprises two or more plant modules. Each plant module comprises at least a heat source configured to provide heat to a heat transfer fluid (HTF); a thermal storage device configured to store thermal energy; a heat exchanger (HE) configured to receive heat via the heat transfer fluid and to provide the heat to a working fluid of a heat consuming system; a charging flow path configured to transfer heat from the heat source to the thermal storage device via the HTF; and a discharging flow path configured to transfer heat from the thermal storage device to the heat exchanger via the HTF. The thermal storage device, the charging flow path and the discharging flow path of each plant module are separate from the thermal storage device, the charging flow path and the discharging flow path of each of the other of the two or more plant modules.

Such modularization of the energy storage plant has several advantages. The control complexity of each plant module may be reduced significantly compared to the plant configuration illustrated in Fig. 1. Further, an independent control of the different plant modules may be allowed, thus greatly increasing the flexibility of the energy storage plant. Similarly, the efficiency of the energy storage plant may be increased by such modularization, for example by avoiding negative effects of part load operation. The energy storage plant may furthermore allow the adding and/or removing of plant modules so that the energy storage plant may be scaled relatively easily. Also, a step-wise project execution may be enabled, for example by subsequently adding plant modules, without requiring a re-design of the whole system. Furthermore, since the plant modules include own thermal storage devices, flexibility in the positioning of the storage devices is achieved that has only little dependence on the remaining plant modules. The footprint of the energy storage plant can thus more easily be adapted to the requirements of a particular project and in particular to the installation site. Further, it can result in a reduction of the footprint.

Furthermore, since each plant module may include its own heat exchanger, the complexity of each heat exchanger may be lower than the one of the large common heat exchanger used in the system of Fig. 1. Also, the heat supply can more easily be adapted, for example to low loads, compared to the conventional large heat exchanger that may need to be operated at a fixed minimum load. Furthermore, the size of the individual components can thereby be decreased, so that transport limitations during the construction phase may be reduced or avoided.

Furthermore, by using plural smaller storage devices in the individual plant modules, the distribution of the energy to be stored can be improved. For example, a storage device of a prior art system may be charged to a charging state of 20%, whereas by using said plant modules, for example five, the storage device of one module may be fully charged whereas the storage devices of four other modules may be uncharged. This may be significantly more efficient that the single high capacity storage device being only partially charged at 20%. Furthermore, such configuration allows the plant modules to be configured for different operating points and to be operated individually. The energy storage plant can thereby more easily adapt to part load operations.

Furthermore, in case of maintenance, the energy storage plant may remain available, as individual plant modules may be serviced while the remaining plant modules remain operational. Additionally, it is possible to use only very few different types of plant modules, or only one type of plant module, so that standardization may be achieved. This may reduce the effort and risk for setting up new energy storage plants. In particular, the effort for scaling up an existing storage plant to a new plant with a higher capacity is reduced significantly. Such standardization may further lead to a simplified engineering and certification process.

The thermal storage device, the charging flow path and the discharging flow path of the different plant modules may in particular be physically separate and distinct; the flow paths may for example be implemented as separate open or closed cycles. In particular, the charging/discharging flow paths of each plant module may be different from and not flow-connected to the charging and discharging flow paths of the other plant module(s). The heat transfer fluid can thus be conveyed independently in each plant module.

The heat exchangers of the two or more plant modules may be configured to feed the same heat consuming system, they may in particular provide their heat to the same working fluid.

The heat source and the heat exchanger of each plant module may likewise be separate and distinct. It may however be conceivable that a common heat source provides heat to the HTF of the different plant modules, for example a heat exchanger of a solar plant through which the different separate charging flow paths of the different plant modules lead.

Each plant module may further comprise a blower configured to convey the heat transfer fluid along the charging flow path and along the discharging flow path. The blowers of the two or more plant modules may likewise be separate and distinct. Each plant module may furthermore include valves that can be opened and closed to determine which flow path the HTF will take, depending on a mode of operation.

In an embodiment, each plant module is configured to be operable in one of plural operating modes independent of an operating mode of the other of the two or more plant modules. The plural operating modes comprise at least a charging mode in which the heat transfer fluid is conveyed along the charging flow path and a discharging mode in which the heat transfer fluid is conveyed along the discharging flow path. The heat transfer fluid may be conveyed along the same passage through the thermal storage device, either in opposite directions or in the same direction during charging and discharging. Further possible operating modes may include an idle mode in which the plant module is inactive, a direct heating mode in which heat is directly provided from the heater to the heat exchanger, and/or other possible modes. Such independent operation allows the implementing of different operating schemes for the energy storage plant, a better distribution of thermal energy within the plant and for example the discharging of one module for the purpose of maintenance or for stabilizing the temperature field inside the thermal storage device of the module, as for example described in the document EP 3245467 A1.

The energy storage plant may further comprise a control system configured to independently control the operating mode of each of the two or more plant modules. For example, the control system may be configured to operate the energy storage plant at least in a parallel operating mode in which at least two, or even all, of the plant modules are simultaneously operated in the same operating mode. For example, some, all or at least most of the plant modules may be operated simultaneously in the charging mode or in the discharging mode. Such parallel operation allows a higher power intake during charging and a higher power output of thermal power during discharging.

In another example, the control system may be configured to operate the energy storage plant at least in a serial operating mode in which at least two of the plant modules are sequentially, in particular one after the other, operated in the same operating mode. For example, one plant module after the other may successively be operated in the charging mode to provide a continuous charging over a prolonged period of time, or in the discharging mode to provide a prolonged period of discharging. This may result in an efficient operation while the operating time span can be increased. The remaining plant modules may be inactive, they may for example operate in an idle mode. At least two, three, four, or more plant modules may be operated successively in the same operating mode, whereas the transition between the modes may dependent on the charging state of the thermal storage device of the active plant module.

As an example, the serial operating mode may include a serial charging mode in which one or a group of plant modules is operated in a charging mode until the respective thermal storage device(s) is charged to a predefined state (which may also be termed charging state or charging level, e.g. a full state), and a second or a second group of plant modules is subsequently operated in a charging mode until the respective thermal storage device(s) are charged to a predefined state, which may be the same or different than the first mentioned state. This may continue with a third, a fourth, ... plant module. Likewise, a sequential discharging may be performed, wherein one or a group of plant modules becomes inactive when the thermal storage device reaches a predefined state (e.g. an empty state) and a second or second group of plant modules is subsequently operated in the discharging mode, again until reaching a predefined charging state, which may be the same or different from the formerly mentioned state, e.g. an empty state. This can continue until all devices are either charged or discharged. By such operation, it can be ensured that most storage devices are either fully charged or empty, minimizing the number of half-charged storage devices and thus the negative effects associated therewith, such as a flattening of the temperature gradient within the devices due to thermal processes.

The control system may further be configured to operate the energy storage plant at least in a continuous heat supply mode in which at least one plant module is operated in a charging mode and at least one plant module is operated in a discharging mode, and/or wherein at least one plant module is operated in a power-to-heat mode in which heat is transferred via the heat transfer fluid from the heat source to the heat exchanger of the plant module. Such continuous heat supply mode may ensure that heat is continuously and without interruption delivered to the working fluid by one or more of the plant modules.

The control system may further be configured to operate the energy storage plant at least in a forecast mode in which a decrease or interruption of an energy supply to an energy consumer is forecast and in which operation of at least one plant module is changed to a standby mode or a discharging mode prior to the occurrence of such decrease or interruption. The energy storage plant may thus be brought into a ready state in which it can supply energy to the energy consumer upon the occurrence of such decrease or interruption. As an example, a cloud may reduce the energy output from a solar plant, or a drop in wind speed may reduce the output of a wind farm. The energy storage plant may then supply respective energy to the energy consumer during such decrease or interruption, for example in the form of heat or in the form of electricity, depending on the type of consumer and the configuration of the energy storage plant. A constant and continuous energy supply can thereby be ensured.

In an embodiment, the control system may be configured to obtain a demand for the storage of energy in the energy storage plant and/or the supply with energy by the energy storage plant. For example, if excess power is available on the power grid, the energy storage plant may determine an amount of electrical power to be taken from the power grid for storage or may receive a respective command. The control system may further be configured to determine a number of plant modules required for meeting the demand (i.e. the demand to store energy or to deliver energy) and to operate the determined number of plant modules in a respective operating mode to meet the demand. It should be clear that the selection of the respective modules may further depend on the charging state of the respective plant modules, i.e. of their thermal storage devices. For example, if a certain electrical power is to be taken up by the energy storage plant, the respective number of plant modules required to take up such power and having relatively empty storage devices is selected and activated in a charging mode, in which the heaters of the activated modules take up the electrical power, which is then stored as heat in the respective thermal storage devices. Likewise, if a certain thermal power or electrical power needs to be output by the energy storage plant, a respective number of relatively fully charged plant modules is selected and is operated in the discharging mode to provide the required power via their heat exchangers. The demand may be obtained in different ways, for example may be derived internally (e.g. based on external parameters, such as power availability on the grid, electricity price, grid frequency or voltage energy demand by a consumer and the like). Electricity prices may for example be monitored to derive a demand for taking up a certain electrical power from the grid or supplying certain electrical power to the grid. By using the determined number of plant modules for the respective operation, the remaining modules can remain inactive, and can thus be maintained for example in a charged state or in an uncharged state, so that negative effects associated with only partly charged storage devices, such as the flattening of the temperature gradient within the storage device and the resulting reduced thermal storage capacity, are avoided.

In an embodiment, each plant module comprises an open or closed cycle of the heat transfer fluid. The open or closed cycle of each plant module may be separate from the open or closed cycles of each of the other of the two or more plant modules. A closed charging cycle along the charging flow path may for example include the heat source, the thermal storage device, and a blower, and the HTF may be re-circulated to the heat source. A closed discharging cycle along the discharging flow path may for example include the thermal storage device, the heat exchanger, and the blower, and the HTF may be circulated back to the thermal storage device. It should be clear that the order of the components in the respective cycle may be changed, and that further components may be present in the respective cycle.

In an embodiment, the heat exchangers of the two or more plant modules may be configured to provide heat to the same heat consuming system. The heat exchangers may in particular be configured to exchange heat between the heat transfer fluid of the respective plant module and the working fluid of the heat consuming system.

In an exemplary implementation, the energy storage plant is an electric-thermal energy storage plant, wherein the energy storage plant comprises the heat consuming system. The heat consuming system comprises a re-electrification cycle configured to transform heat of the working fluid received from the heat exchangers of the plant modules to electrical energy. Such re-electrification cycle may for example include a Rankine-cycle, a Brayton-cycle or the like. For example, a steam turbine (e.g. operating according to the Rankine-cycle), and an electrical generator coupled thereto may provide the re-electrification cycle. The energy storage plant may thus be provided with electrical energy, may store this energy in the form of thermal energy, and may output again electrical energy. In other configurations, the energy storage plant outputs heat (via the working fluid), and the heat consuming system does not form part of the energy storage plant. In such configuration, the heat consuming system may for example be or comprise a district heating network or an industrial process, it may for example be a steam line. Combinations are certainly conceivable; the energy storage plant may for example be configured to output both electrical power and heat, which is provided to one or more respective heat consumers. The energy storage plant may in such configurations for example comprise a steam turbine and generator for outputting electrical power and an output for heated working fluid to provide thermal power.

The energy storage plant may comprise a single output for the heated working fluid towards a heat consuming system and may further comprise a single inlet for receiving cooled working fluid from the heat consuming system. The energy storage plant thus operates as a single plant, but comprises internally plural plant modules.

The energy storage plant may further comprise flow connections for the working fluid of the heat consuming system configured to receive heat from the heat exchangers of the plant modules. The flow connections may be configured to connect the heat exchangers of at least two, preferably all, of the plant modules in parallel with respect to the flow of the working fluid through the heat exchangers. Accordingly, by connecting more heat exchangers in parallel, the capacity to transfer heat to the working fluid can be increased. The flow connections may in particular be provided by respective manifolds.

The flow connections may comprise at least one mixing point configured to receive a flow of working fluid from at least two heat exchangers and to give out a combined flow through a common flow conduit. The flow connections may also comprise at least one separation point configured to receive a flow of working fluid from a common flow conduit and to separate the received flow into at least two flows provided to respective heat exchangers of the plant modules. A mixing point may for example mix the flow received from two, three, four or more heat exchangers, and a separation point may separate the flow into two, three, four or more flows. The common flow conduit may provide the working fluid to the heat consuming system or receive working fluid from the heat consuming system (for the mixing point or the separation point, respectively). At respective mixing/separation points, plant modules may be connected or disconnected to increase or decrease the power capacity and/or the storage capacity of the energy storage plant.

The flow connections may comprise at least a first mixing point and a second mixing point downstream (in the flow direction of the working fluid) of the first mixing point. The second mixing point may be configured to receive a flow leaving the first mixing point through the common flow conduit and a flow from at least one further heat exchanger of a plant module or from a third mixing point.

The flow connections may comprise at least a first separation point and a second separation point downstream (in the flow direction of the working fluid) of the first separation point. The first separation point may be configured to provide a separated flow of working fluid to the second separation point and to provide a separated flow of working fluid to at least one further heat exchanger of a plant module or to a third separation point. Mixing points and/or separation points may accordingly be cascaded. This may for example provide the possibility to add further plant modules in case the number of connections of each single mixing/separation point is limited, for example due to constructive limitations or fluid mechanical limitations. Further, by making use of multiple mixing/separation points, the length and/or diameter of the conduits between the plant modules and the mixing/separation points may be reduced significantly compared to a connection of all plant modules at one location. It should be clear that the number of mixing points and/or separation points does not need to be the same. There may be at least 1, 2, 3, 4, ... mixing points and at least 1, 2, 3, 4, ... separation points in the energy storage plant. The flow connections, the respective conduits and the mixing/separation points may form part of the energy storage plant. Mixing/separation points may be provided by respective manifolds.

The flow connections may comprise one or more flow control elements configured to control a flow of the working fluid into or out of a heat exchanger of at least one of the plant modules. For example, the one or more flow control elements may be provided and arranged such that a pressure at the mixing point (preferably at each mixing point) is controllable to be similar (in particular the same) for each flow into the respective mixing point. A proper flow of working fluid into and out of the mixing points can thereby be ensured. A flow control element may for example comprise a valve, a damper, a flap or the like. A flow control element is preferably provided at the mixing points and/or separation points. For example, for each flow connection towards and/or out of a heat exchanger, at least one flow control element may be provided. Inactive plant modules may by such flow control elements for example be disconnected from the remaining system, i.e. the flow of working fluid through its heat exchanger may be stopped. Plant modules may thus be added/removed or serviced during operation of the energy storage plant.

The thermal storage devices may be arranged on the same plant site of the energy storage plant. They may be distributed across such plant site. It is also conceivable that the thermal storage devices of two or more, or even all, plant modules may be arranged on top and/or next to each other. A compact configuration may thereby be achieved, thermal insulation may be improved and insulation material may be saved. The heat source of one, preferably of each, plant module may be at least one of an electrical heater receiving electrical power from a power grid; a heater receiving thermal energy from a concentrated solar plant (CSP), in particular from a CSP tower; or a heater receiving thermal energy from a flue gas of a gas turbine. The latter mentioned heaters may be provided in the form of heat exchangers and/or heat pumps.

The heat sources of the different plant modules may receive energy from the same source or from different sources. For example, some heat sources may receive electrical energy for storage while other heat sources may receive thermal energy for storage.

The heat exchanger of each plant module may be a steam generator. In particular, it may be a heat recovery steam generator (HRSG).

The thermal storage device of each plant module may be a horizontal storage device. "Horizontal" means that the main fluid flow through the storage device (e.g. a storage chamber) is in horizontal direction. In other implementations, the storage device may be a vertical storage device wherein a main flow direction of the heat transfer medium through the storage device is in vertical direction. The thermal storage device may comprise an insulated housing or chamber that forms an inlet and an outlet. The thermal storage device (e.g. the housing/chamber) may contain a heat storage material. The HTF is used to transfer heat to the storage material in the charging mode and to extract heat from the storage material in the discharging mode. The plant modules may use heated air as HTF. The flow direction of the HTF through the storage device is preferably opposite in the charging mode and the discharging mode (i.e. it is reversed), although it may be the same in some implementations.

In the charging mode, the HTF is passed through the heat source (electrical heater or heat exchanger), whereby the temperature of the HTF is increased. Inside the storage device, the HTF transfers its heat to the heat storage material. In the discharging mode, the HTF enters the storage device in a low temperature state which results in a heat transfer from the heat storage material to the HTF. The heated HTF is then passed through the heat exchanger which transfers the heat from the HTF to the working fluid of the heat consuming system.

The thermal storage device may be configured to store thermal energy at a temperature between 200 °C and 1000 °C, preferably between 400 °C and 1000 °C, more preferably between 500°C and 900°C when the storage device is in a charged state. For example, the temperature in the energy storage device may be kept between 550 and 800°C. In the discharging flow path, the temperature of the working fluid leaving the energy storage device may lie within the range of about 500°C to 800°C. When the thermal storage device is in an empty state, the temperature in the thermal storage device may lie in the range between ambient temperature and 800°C. It should be clear that it depends on the particular application and system configuration at which temperature the thermal storage device is considered to be fully charged or to be uncharged/empty. The pressure of the working fluid in the charging flow path and in the discharging flow path may be lower than 2 bar, it may be close to atmospheric pressure, e.g. between 0.7 bar and 1.3 bar.

Flow channels may be provided in the heat storage material; they may form due to the structure of the material, e.g. by interspaces, gaps and/or pores in the heat storage material, or they can be built into the heat storage material. Preferably, the heat storage material comprises a mesh of heat exchange channels through which the HTF passes, both along the charging and the discharging flow paths.

The heat storage material may comprise or consist of gravel, rubble, sand and/or grit. It may comprise or consist of rocks, bricks, stone, lava stone, granite, basalt, slag and/or ceramics, or a combination thereof, and can be provided as bulk material (it may be configured as pebble bed). The thermal storage device can thus be provided cost efficiently while being capable of storing large amounts of thermal energy. The chamber housing the heat storage material may be a space, a cavity, an excavation or a housing (e.g. a concrete structure) in which the heat storage material is located. In some configurations, the thermal storage device may include several storage chambers placed in series and/or parallel, e.g. with valves and piping in between.

The thermal storage device of each plant module may in particular be configured as described in the document EP3102796A1, and may operate according to similar principles. According to a further embodiment of the invention, a method of operating an energy storage plant is provided. The energy storage plant may have any of the configurations described herein. The method comprises operating one or more of said plant modules in a charging mode in which the heat transfer fluid is conveyed along the charging flow path to store thermal energy in the respective plant module; and/or operating one or more of said plant modules in a discharging mode in which the heat transfer fluid is conveyed along the discharging flow path to provide a supply with heat by the heat exchanger of the respective plant module. It should be clear that operation in the charging mode may occur upon a respective request or determining the need to store energy, and operation in the discharging mode may occur upon a respective request or determining the need to supply energy.

It should further be clear that the method may comprise operation in any of the modes described herein, e.g. operation of the plant in the parallel and/or serial operating mode, operation of the plant modules in an idle mode, a power-to-heat-mode, and the like. The operating mode may be selected in dependence on power availability/demand, charging state of the plant modules, and/or external parameters, such as electricity price, forecasted demand and the like.

The method may be performed by an energy storage system having any of the configurations described herein. The method may further comprise any of the steps described herein with respect to the system. Likewise, the energy storage system may be configured to carry out the method in any of the implementations disclosed herein.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing showing an energy storage system including a heater island with plural heaters and a blower island with plural blowers.
Fig. 2 is a schematic drawing showing an energy storage system according to an embodiment of the invention which includes two plant modules.
Fig. 3 is a schematic drawing showing an energy storage system according to an embodiment of the invention which includes four plant modules.
Fig. 4 is a flow diagram illustrating a method of operating an energy storage system in a parallel operating mode in accordance with an embodiment of the invention.
Fig. 5 is a flow diagram illustrating a method of operating an energy storage system in a serial operating mode in accordance with an embodiment of the invention.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

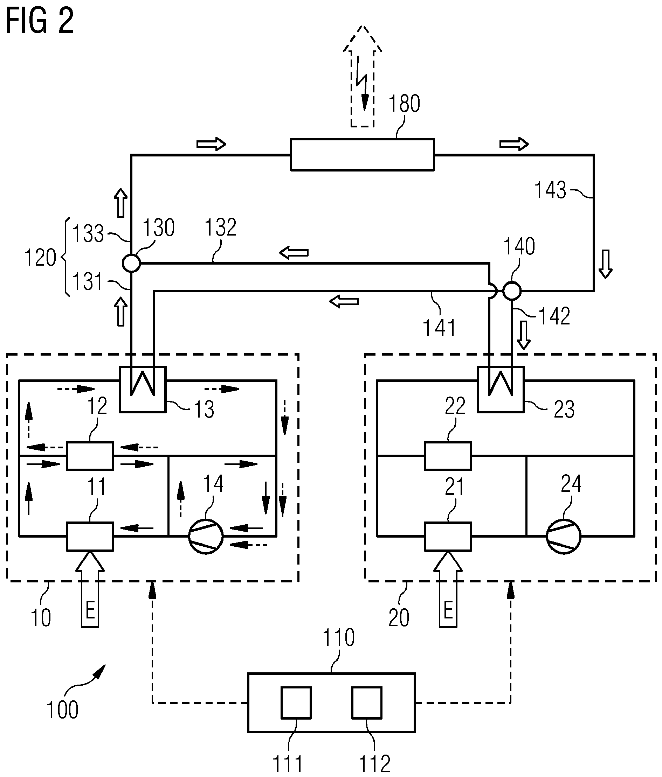

Fig. 2 schematically illustrates an energy storage plant 100 according to an embodiment of the invention which comprises at least a first plant module 10 and a second plant module 20. Each plant module 10, 20 includes a cycle for a heat transfer fluid (HTF), which can be an open cycle or a closed cycle, as illustrated. The HTF is preferably air. As shown, the HTF cycles of the different plant modules 10, 20 are entirely separate, there is no flow connection between the cycles. Each plant module 10, 20 includes a heat source 11, 21 that provides heat to the heat transfer fluid, a thermal storage device 12, 22 that stores thermal energy, and a heat exchanger 13, 23 that exchanges heat between the HTF and a working fluid of the heat consuming system 180. Each plant module further includes a blower 14, 24 that conveys the HTF within the respective HTF cycle.

A control system 110 controls operation of the energy storage plant 100, and may include a central controller and/or controllers associated with each of the plant modules 10, 20 (i.e. decentralized controllers). The control system 110 can operate each of the plant modules 10, 20 at least in a charging mode and a discharging mode. In the charging mode, the heat source 11 transfers heat to the HTF, which is conveyed by blower 14 to the thermal storage device 12, which the HTF enters at a higher temperature and leaves at a lower temperature, thereby depositing heat within the thermal storage device 12. The cooled HTF is then cycled via the blower 14 back to the heat source 11, where the temperature of the HTF is increased again. Accordingly, by cycling in the charging mode the HTF through heater 11 and storage device 12, thermal energy is deposited within storage device 12.

In the discharging mode, the heat source 11 is taken out of the cycle or deactivated (as for example described in the document EP 3327399 B1) and the heat exchanger 13 is connected into the cycle. The HTF is then conveyed by blower 14 through the storage device 12, in which its temperature is increased, thus taking up heat, and is then passed through the heat exchanger 13, in which heat is transferred from the HTF to the working fluid of heat consuming system 180. The HTF thus leaves the heat exchanger 13 at a lower temperature, and is via blower 14 cycled back to the storage device 12, in which its temperature is again increased. Accordingly, heat (i.e. thermal energy) is transferred from storage device 12 via heat exchanger 13 to the working fluid of heat consuming system 180. Fig. 2 schematically illustrates with solid arrows the charging flow path of the HTF and further illustrates with dashed arrows the discharging flow path of the HTF. Controllable valves can be provided in plant module 10 to switch between the charging mode and the discharging mode. Further operating modes can be implemented, such as an idle mode in which the HTF is not circulated through the plant module, or a power-to-heat mode in which heat is directly transferred from heat source 11 to the heat exchanger 13, or mixed modes, such as a simultaneous operation of the charging mode and power-to-heat mode, wherein heat is transferred from the heat source to both the thermal storage device and the heat exchanger. Although the above description has been given with respect to plant module 10, it likewise applies to the other plant modules 20, 30, 40, ... of energy storage plant 100, which can be configured correspondingly. The HTF may pass through the storage device 12 along the same flow path, either in opposite directions during charging and discharging (as illustrated) or in the same direction (depending on the configuration of the flow lines).

The storage device 12 may comprise an insulated housing with one or more inlet channels and one or more outlet channels arranged on top and/or next to each other. Optionally, the inlet/outlet channels may be equipped with flaps/dampers in order to control the mass flow between multiple channels. The housing may be filled with a storage material. This may for example be volcanic rocks configured as a pebble bed. Alternatives include sand, bricks, salt, ceramics, or a combination thereof.

As illustrated, the heat source 11, 21 receives energy E from an external source. The external source may for example be a power grid providing electrical energy, or a plant providing heat, such as thermal energy provided from a concentrated solar plant (CSP) tower or thermal energy from the flue gas of a gas turbine. Heat source 11, 21 can be implemented as an electrical heater connected to an electric grid. In the latter two cases, the heat source 11, 21 may be implemented as a heat exchanger, for example exchanging heat between a working fluid of the CSP and the HTF, or between the flue gas of the gas turbine and the HTF. Other implementations are conceivable.

The heat exchanger 13, 23 of plant modules 10, 20 constitutes a heat consumer within each plant module. The working fluid of the heat consuming system 180 may be a phase changing medium, and may in particular be steam. Heat consuming system 180 may make direct use of the heat provided by the heated working fluid, and may for example be a district heating network or an industrial process. Preferably, the heat consuming system 180 comprises a re-electrification cycle that converts heat transported by the working fluid into electrical energy. It may for example include a steam turbine that drives an electrical generator. Heat consuming system 180 thus optionally outputs electrical energy, as illustrated by the dashed arrow in Fig. 1. Heat exchanger 13, 23 may for example be a heat recovery steam generator forming part of a Rankine-water-steam cycle. Other implementations are also conceivable, such as implementing the re-electrification cycle as a Brayton cycle.

The energy storage plant 100 further includes flow connections 120 through which the working fluid of the heat consuming system 180 is conveyed (for example by means of a pump (not shown)). The flow of working fluid from heat exchanger 13 and heat exchanger 23 of the first and second plant modules 10, 20 are merged at a mixing point 130. A common flow leaves mixing point 130 through the common flow conduit 133. A flow conduit for flow 131 may accordingly be provided or connected between heat exchanger 13 and mixing point 130, and a further flow conduit is provided between heat exchanger 23 and mixing point 130. The common flow conduit 133 can deliver the working fluid to the heat consuming system 180 and may accordingly provide a respective output for the heated working fluid of energy storage plant 100. As explained further below, the common flow conduit 133 may also be connected to a further mixing point. The cooled working fluid, after leaving heat consuming system 180, may be received via a common flow conduit 143, which may accordingly form an input of energy storage system 100 for the working fluid. The received flow of working fluid is separated at a separation point 140 in order to provide it to the different heat exchangers 13, 23 of the plant modules. A first flow 141 leaves the separation point 140 to the heat exchanger 13 and a second flow 142 leaves the separation point 140 towards heat exchanger 23. Respective flow connections/conduits may be provided between the separation point 140 and these heat exchangers 13, 23, as illustrated in Fig. 2. In the example of Fig. 2, separation point 140 receives the working fluid through the common conduit 143 that is fluidly coupled to the heat consuming system 180, but it may in other configurations be connected to a further separation point, as explained further below. In some implementations, the heat consuming system 180 may form part of the energy storage plant 100, in which case the energy storage plant 100 may not have an inlet/outlet for the working fluid. As can be seen, the heat exchangers 13, 23 are connected in parallel to heat the working fluid of heat consuming system 180. The plant modules 10, 20 thus act as a single plant that provides a heated working fluid to the heat consuming system. The energy storage plant 100 may in particular be configured to provide a single flow of heated working fluid to the heat consuming system 180 and to receive a single flow of cooled working fluid from the heat consuming system 180.

At the mixing point(s) and/or separation point(s), one or more valves, flaps, dampers or the like may be provided in order to control the mass flow through the respective flow conduits and/or the pressure. These may be adjusted so that the pressure of the flows into the mixing point 130 may be similar or the same for each flow, either by pre-setting respective flow control elements, or by active control via control system 110. The flows can thereby be efficiently merged at the mixing point 130. By respective flow control elements at the separation point 140, the mass flow through each of the heat exchangers 13, 23 may be controlled. It is beneficial if each mixing/separation point is equipped with a respective flap and/or valve arranged such that the flow to/from each individual heat exchanger 13, 23 can be regulated and/or terminated. This allows taking a heat exchanger out of the working fluid cycle, so that an inactive plant module 10, 20 can effectively be disconnected from the overall system (for example by closing valves in the conduits to terminate flows 131 and 141, plant module 10 can be taken out of the working fluid cycle).

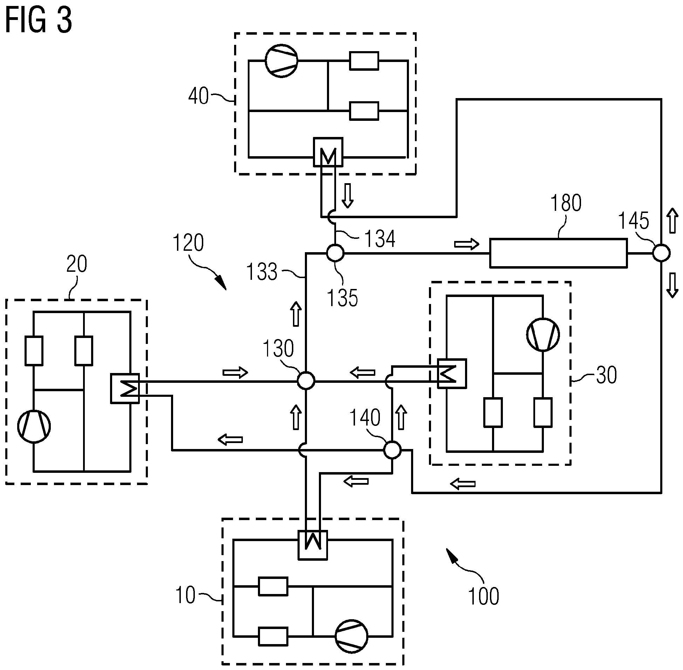

Fig. 3 schematically illustrates a further embodiment of the energy storage system 100, which is a modification of the embodiment of Fig. 2 so that the above explanations are equally applicable. In Fig. 3, four plant modules 10, 20, 30 and 40 are provided in energy storage plant 100. In order to provide a common flow of working fluid towards the heat consuming system 180, the flows of working fluid from the four respective heat exchangers need to be mixed. This may be achieved by providing a mixing point 140 having four inlets. In other implementations, as shown in Fig. 3, when more than two plant modules are present, additional mixing points may be introduced. In the present example, the three plant modules 10, 20 and 30 are connected at a first mixing point 130 (i.e. their working fluid flows from their heat exchangers are provided towards this mixing point 130). The fourth plant module 40 is connected via an additional mixing point 135 arranged downstream of the first mixing point 130. The second mixing point 135 accordingly receives the common flow through common flow conduit 133 and further receives the flow of working fluid 134 from the fourth plant module 40. It is certainly also possible to provide an additional mixing point, so that two of the plant modules each are connected to one mixing point, and the second mixing point 135 then receives the flows from two common conduits from these respective mixing points. A cascade of mixing points can thus essentially be provided, and the flow conduits may form a tree structure. The separation points may be configured correspondingly. In the example of Fig. 3, a first separation point 145 is provided and a second separation point 140 is arranged downstream of the first separation point 145. First separation point 145 can separate the common flow received from heat consuming system 180 for example into two flows provided to further separation points, or into a flow provided to a separation point 140 and to a plant module 40, as shown in Fig. 3. The second separation point 140 separates the received flow into three flows each being provided to a heat exchanger of the three plant modules 10, 20, 30. Again, other configurations with three separation points can be provided. If further plant modules are added, further mixing/separation points may be provided, or a plant module may be added to existing mixing/separation points.

Providing more than one set of mixing/separation points may have several advantages. For example, the number of possible connections to a single mixing/separation point may be limited, e.g. due to constructive or fluid mechanical restrictions. Further, by connecting plant modules to multiple mixing/separation points, the length and/or diameter of conduits between the plant modules and the mixing/separation points can be reduced significantly compared to connecting all plant modules to a single manifold.

It should be clear that in Fig. 3, the flow conduits 120 including the mixing and separation points 130, 135, 140, 145 form part of the energy storage plant 100 and provide a common flow of working fluid to a heat consuming system 180.

Turning back to Fig. 2, the control system 110 controls the operation of energy storage plant 100 and of the individual plant modules 10, 20, 30, 40, ..., and can in particular operate each plant module in an operating mode independently from the operation of the other plant modules. Control system 110 can thus implement different operating strategies based on the charging state of the plant modules and any demand or request to store energy or to provide energy. Control system 110 may receive respective requests to store thermal/electrical energy of a certain amount or at a certain power, or to provide thermal/electrical energy of a certain amount or at a certain power. It may in some implementations itself determine the availability of energy for storage (e.g. energy on a grid) or the need to discharge energy (e.g. energy demand on grid or heat demand by external heat consumer). Such demands may be derived from external parameters, such as grid parameters, for example energy demand on the grid, electricity price, and the like. Control system 110 then controls the energy storage plant 100, in particular the individual modules, so as to meet the respective demand.

Control system 110 may charge and/or discharge the plant modules (i.e. the respective storage devices) in parallel (simultaneously) or in series (successively). Operation in parallel may involve all or a group of the plant modules. It is preferred for situations/applications with a high power availability (charging) or demand (discharging). For example, in a situation of a high availability of power, all modules can be charged at or close to their nominal power intake, i.e. the power intake capacity of energy storage plant 100 is fully used. Likewise, demand for providing a high power output (e.g. electrical power or heating power), all modules can be discharged at or close to their nominal power output, thus providing the maximum power output of the energy storage plant 100. If the availability/demand is at or drops below a level which requires all modules to be active at nominal power, the control system 110 may reduce the number of active modules to meet such reduced power requirement, instead of reducing the charging/discharging power of each module. Negative effects of a part load operation of the modules are thus avoided, as the active modules operate close to their nominal power. Also, in such parallel operation, one or more plant modules may be kept in a standby mode (e.g. idle mode), for example as a backup to ensure availability and reliability.

Control system 110 may include a processing unit 111 and memory 112. The processing unit 111 may include any type of processor, such as a microprocessor, an application specific integrated circuit, a digital signal processor or the like. Memory 112 may include volatile and non-volatile memory, in particular RAM, ROM, FLASH-memory, a hard disc drive and the like. The memory 112 may store control instructions which when executed by processing unit 111 cause the control system to perform any of the methods disclosed herein. Control system 110 may further include input and output interfaces for receiving data and for transmitting control data and control commands to the plant modules. The control system 110 may include a user interface (e.g. including a display and an input device) via which user input from an operator of the plant 100 can be received and may include a data connection for receiving remote commands and/or remote data, e.g. electricity price data.

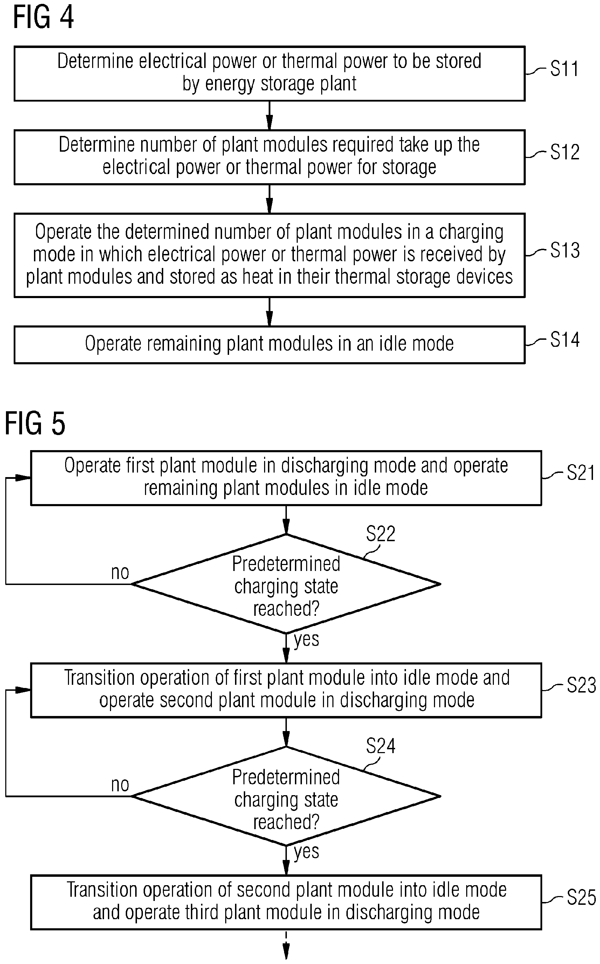

Fig. 4 shows a flow diagram that exemplarily illustrates parallel operation. In step S11, the electrical power or thermal power that is to be stored by the energy storage plant 100 is determined. In step S12, the number of plant modules that are required to take up the respective electrical power or thermal power for storage is determined. In step S13, the determined number of plant modules is operated in a charging mode in which the electrical power or thermal power is received by the plant modules (in particular by their respective heat source 11, 21) and is stored as heat in their respective thermal storage device. It should be clear that the selection of the plant modules may for example depend on the respective charging state, i.e. plant modules may be selected for which the charging state of their thermal storage device 12, 22 is relatively low so that sufficient energy can be stored. As indicated in step S14, the remaining plant modules may be operated in a standby mode, in particular in an idle mode. The method may be performed correspondingly for discharging energy from the energy storage plant 100 at a desired discharge power, e.g. electrical power or thermal power.

Control system 110 may further operate the energy storage plant 100 in a series operating mode in which two or more plant modules are subsequently charged/discharged. In such operating mode, long charging/discharging durations may be achieved. The power capacity for power input/power output of the energy storage plant 100 is thereby reduced in favor of an increased charging/discharging time. Fig. 5 shows a flow diagram illustrating an exemplary serial operating mode. In step S21, a first plant module is operated in the discharging mode and the remaining plant modules are operated in an idle mode, i.e. are inactive. In step S22, it is checked if the first plant module has reached a predetermined charging state, for example if the respective storage device has reached an empty state. Once the empty state is reached, the method continues in step S23 by transitioning operation of the first plant module into the idle mode and operating a second plant module in the discharging mode. This transition may occur simultaneously in such a manner that the flow of thermal/electrical power given out by energy storage plant 100 is not interrupted. Again, it is checked in step S24 if the respective second plant module has reached a predetermined charging state (e.g. empty), upon which the method continues in step S25 with transitioning operation of the second plant module into the idle mode and operating a third plant module in the discharging mode. This may for example continue until all plant modules are discharged, or until no further demand for electrical/thermal power exists. The method can likewise be performed for sequentially charging the plant modules. Also, it should be clear that in each of the charging/discharging steps S21, S23, S25, two or more plant modules can be operated in parallel to achieve a desired power intake/power output.

Other operating modes are conceivable. For example, it is possible to charge one or more of the plant modules while discharging one or more of the remaining modules, or operating one or more remaining modules in a power-to-heat mode. Such operating mode may be termed "continuous heat supply mode", as in this mode, it is possible to deliver an uninterrupted heat supply to the heat consuming system 180.

Independent control of the plant modules also allows the discharging of a plant module separate from the other modules. This allows the performance of maintenance work for the respective module, while the operation of the overall system can continue and is only partially affected by the unavailability of the shutdown module.

As indicated above, the control system 110 may determine the appropriate charging and discharging signals for the plant modules based on several parameters. One possible parameter is the price and/or availability of renewable energy, for example charging if the price of renewable energy is below a certain threshold (indicating an availability of excess renewable energy) and discharging if it is above a certain threshold (indicating a shortage of renewable energy). The electrical system, in particular the power grid, can thereby be stabilized. The control system 110 can also initiate the discharging of one plant module to provide a pre-heating or warm-keeping of the heat exchanger prior to ramping up to full power output. In case of intermittent power supply, for example by photovoltaic plants, wind farms, or concentrated solar plants, the control system 110 may forecast the occurrence of an interruption in the power output of these systems, which can be due to for example a cloud, a drop in wind speed or the like. The control system 110 can then, based on such forecast or observation, transition one or more plant modules from a charging mode into a discharging mode prior to the occurrence of the interruption, or keep respective modules on standby for such transition. Accordingly, a constant power supply to consumers that are supplied by such plants can be ensured, since the respective drop in power output of these PV/wind/CSP plants is compensated by the power output of the energy storage plant 100.

As outlined in detail above, the energy storage plant 100 provides several advantages. In particular, it provides an increased flexibility regarding the increasing or decreasing of the storage capacity of the plant or of the power at which energy can be provided or stored, which can be achieved by adding or removing one or more plant modules and connecting or disconnecting them to a mixing and separation point. The independent operation of the different plant modules further results in several advantages, as outlined in detail above. The embodiments disclosed herein may thus provide an improved energy storage plant.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. An energy storage plant for storing energy, comprising two or more plant modules (10, 20), wherein each plant module (10, 20) comprises at least:
- a heat source (11, 21) configured to provide heat to a heat transfer fluid;
- a thermal storage device (12, 22) configured to store thermal energy;
- a heat exchanger (13, 23) configured to receive heat via the heat transfer fluid and to provide heat to a working fluid of a heat consuming system (180);
- a charging flow path configured to transfer heat from the heat source (11, 21) to the thermal storage device (12, 22) via the heat transfer fluid; and
- a discharging flow path configured to transfer heat from the thermal storage device (12, 22) to the heat exchanger (13, 23) via the heat transfer fluid,
wherein the thermal storage device (12, 22), the charging flow path and the discharging flow path of each plant module (10, 20) are separate from the thermal storage device, the charging flow path and the discharging flow path of each of the other of said two or more plant modules (10, 20).

2. The energy storage plant according to claim 1, wherein each plant module (10, 20) is configured to be operable in one of plural operating modes independent of an operating mode of the other of said two or more plant modules (10, 20), wherein the plural operating modes comprise at least a charging mode in which the heat transfer fluid is conveyed along the charging flow path and a discharging mode in which the heat transfer fluid is conveyed along the discharging flow path.

3. The energy storage plant according to claim 2, further comprising a control system (110) configured to independently control the operating mode of each of the two or more plant modules (10, 20).

4. The energy storage plant according to claim 3, wherein the control system (110) is configured to operate the energy storage plant (100) at least in a parallel operating mode in which at least two of said plant modules (10, 20) are simultaneously operated in the same operating mode, in particular in the charging mode or the discharging mode.

5. The energy storage plant according to claim 3 or 4, wherein the control system is configured to operate the energy storage plant (100) at least in a serial operating mode in which at least two of said plant modules (10, 20) are sequentially operated in the same operating mode, in particular in the charging mode or the discharging mode.

6. The energy storage plant according to claim 5, wherein the serial operating mode includes a serial charging mode in which at least one first plant module (10) is operated in a charging mode until the respective thermal storage device (12) is charged to a predefined state, and at least one second plant module (20) is subsequently operated in a charging mode until the respective thermal storage device (22) is charged to a predefined state,
and/or
wherein the serial operating mode includes a serial discharging mode in which at least one first plant module (10) is operated in a discharging mode until the respective thermal storage device (12) is discharged to a predefined state, and at least one second plant module (20) is subsequently operated in a discharging mode until the respective thermal storage device (22) is discharged to a predefined state.

7. The energy storage plant according to any of claims 3-6, wherein the control system (110) is configured to obtain a demand for the storage of energy in the energy storage plant (100) and/or the supply with energy by the energy storage plant (100), wherein the control system (110) is configured to determine a number of plant modules (10, 20) required for meeting the demand and to operate the determined number of plant modules (10, 20) in a respective operating mode to meet the demand.

8. The energy storage plant according to any of the preceding claims, wherein each plant module (10, 20) comprises an open or a closed cycle of the heat transfer fluid, wherein the open or closed cycle of each plant module (10, 20) is separate from the open or closed cycles of each of the other of said two or more plant modules (10, 20).

9. The energy storage plant according to any of the preceding claims, wherein the heat exchangers (13, 23) of the two or more plant modules (10, 20) are configured to provide heat to the same heat consuming system (180), the heat exchangers (13, 23) being configured to exchange heat between the heat transfer fluid of the respective plant module (10, 20) and the working fluid of the heat consuming system (180).

10. The energy storage plant according to claim 9, wherein the energy storage plant (100) is an electric-thermal energy storage plant, wherein the energy storage plant (100) comprises the heat consuming system (180), wherein the heat consuming system (180) comprises a re-electrification cycle configured to transform heat of the working fluid received from said heat exchangers (13, 23) to electrical energy.

11. The energy storage plant according to any of the preceding claims, further comprising flow connections (120) for the working fluid of the heat consuming system (180), wherein the flow connections (120) are configured to connect the heat exchangers (13, 23) of at least two of the plant modules (10, 20) in parallel with respect to the flow of the working fluid through said heat exchangers (13, 23).

12. The energy storage plant according to claim 11, wherein the flow connections comprise at least one mixing point (130) configured to receive a flow of working fluid (131, 132) from at least two heat exchangers (13, 23) and to give out a combined flow through a common flow conduit (133), and/or comprise at least one separation point (140) configured to receive a flow of working fluid from a common flow conduit (143) and to separate the received flow into at least two flows (141, 142) provided to respective heat exchangers (13, 23) of said plant modules (10, 20).

13. The energy storage plant according to claim 12, wherein the flow connections (120) comprise at least a first mixing point (130) and a second mixing point (135) downstream of the first mixing point, the second mixing point (135) being configured to receive a flow leaving the first mixing point (130) through the common flow conduit (133) and a flow (134) from at least one further heat exchanger of a plant module (40) or from a third mixing point, and/or comprise at least a first separation point (145) and a second separation point (140) downstream of the first separation point (145), the first separation point (145) being configured to provide a separated flow of working fluid to the second separation point and to provide a separated flow of working fluid to at least one further heat exchanger of a plant module (40) or to a third separation point.

14. The energy storage plant according to any of claims 12-13, wherein the flow connections comprise one or more flow control elements configured to control a flow of the working fluid into or out of a heat exchanger (13, 23) of at least one of said plant modules (10, 20), wherein the one or more flow control elements are provided and arranged such that a pressure at the mixing point (130) is controllable to be similar for each flow (131, 132) into the mixing point (130).

15. A method of operating an energy storage plant, wherein the energy storage plant (100) comprises two or more plant modules (10, 20), wherein each plant module (10, 20) comprises at least:
- a heat source (11, 21) configured to provide heat to a heat transfer fluid;
- a thermal storage device (12, 22) configured to store thermal energy;
- a heat exchanger (13, 23) configured to receive heat via the heat transfer fluid;
- a charging flow path configured to transfer heat from the heat source (11, 21) to the thermal storage device (12, 22) via the heat transfer fluid; and
- a discharging flow path configured to transfer heat from the thermal storage device (12, 22) to the heat exchanger (13, 23) via the heat transfer fluid,
wherein the thermal storage device (12, 22), the charging flow path and the discharging flow path of each plant module (10, 20) are distinct and separate from the thermal storage device, charging flow path and discharging flow path of each of the other of said two or more plant modules (10, 20), wherein the method comprises:
- operating one or more of said plant modules (10, 20) in a charging mode in which the heat transfer fluid is conveyed along the charging flow path to store thermal energy in the thermal storage device (12, 22) of the respective plant module (10, 20); and/or
- operating one or more of said plant modules (10, 20) in a discharging mode in which the heat transfer fluid is conveyed along the discharging flow path to provide a supply with heat by the heat exchanger (13, 23) of the respective plant module (10, 20).
